# EUROPEAN PATENT APPLICATION

(11) **EP 4 636 050 A1**
(43) Date of publication of application: **22.10.2025**
(21) Application number: 23910345.0
(22) Date of filing: 21.12.2023
(51) Int. Cl.: C09J 7/24, C09J 7/25, G02B 1/10, G02B 5/00, G02B 27/01, B32B 27/36, B32B 27/06, B32B 33/00, B32B 7/12

(54) **OPTICAL ISOLATION FILM, IMAGING DEVICE, AND AUTOMOBILE**

(30) Priority: 30.12.2022 CN 202223560020 U
(71) Applicant: Shenzhen Yinwang Intelligent Technologies Co., Ltd., Shenzhen, Guangdong 518110 (CN)
(72) Inventor: YE, Yunsheng, Shenzhen, Guangdong 518110 (CN); HUANG, Yang, Shenzhen, Guangdong 518110 (CN); FANG, Yuanrong, Shenzhen, Guangdong 518110 (CN)
(74) Representative: Gill Jennings & Every LLP
(86) International application number: PCT/CN2023/140718
(87) International publication number: WO 2024/140419

(57) **Abstract**

An optical isolation film and an imaging device are provided. The optical isolation film includes at least one substrate layer and an adhesive layer. The adhesive layer is attached to the substrate layer. A light absorption layer is provided in the adhesive layer. A wavelength of light absorbed by the light absorption layer is 200 nm to 2500 nm. The adhesive layer can be reliably combined with the substrate layer as a whole, implementing a bonding function, and can further absorb a corresponding type of light through the light absorption layer in the adhesive layer, implementing regulation of light transmittance. **In** this way, problems such as white spots, heat aggregation, glare, and ghosting caused by sunlight backflow can be reduced effectively in a light path system by using the optical isolation film. **In** addition, the light absorption layer may be provided in the adhesive layer, so that the adhesive layer can have both a bonding function and a light regulation function. **In** this way, no additional absorption layer needs to be provided, helping reduce a thickness of the entire optical isolation film. For the imaging device using the optical isolation film, a precision matching requirement of an internal component can also be lowered, and a degree of freedom of assembly is high.

## Description

The present invention claims priority to Chinese Patent Application No. 202223560020.3, filed with the China National Intellectual Property Administration on December 30, 2022 and entitled "OPTICAL ISOLATION FILM, IMAGING DEVICE, AND VEHICLE", which is incorporated herein by reference in its entirety.

### TECHNICAL FIELD

This application relates to the field of optical component technologies, and in particular, to an optical isolation film, an imaging device, and a vehicle.

### BACKGROUND

A head-up display (Head-Up Display, HUD) device can project a current speed per hour, navigation, and other information onto a photoelectric display apparatus on a windshield to form an image in front of the windshield, so that a driver can see the navigation and speed information without turning or lowering the head. However, an existing HUD device has problems of high sunlight energy transmittance and high surface light reflectance. As a result, sunlight gathers to form a focus after passing through, which causes overheating or burning of a component or causes a problem such as glare or ghosting, affecting driving experience.

### SUMMARY

An objective of this application is to provide an optical isolation film, an imaging device, and a vehicle, to resolve the foregoing problems of high sunlight energy transmittance and high surface light reflectance of an HUD device in the conventional technology.

A first aspect of this application provides an optical isolation film, including:
at least one substrate layer; and
an adhesive layer, where the adhesive layer is attached to the substrate layer, a light absorption layer is provided in the adhesive layer, and a wavelength of light absorbed by the light absorption layer is 200 nm to 2500 nm.

In this application, the adhesive layer can be reliably combined with the substrate layer as a whole, implementing a bonding function, and can further absorb a corresponding type of light through the light absorption layer in the adhesive layer, implementing regulation of light transmittance. In this way, problems such as white spots, heat aggregation, glare, and ghosting caused by sunlight backflow can be reduced effectively in a light path system by using the optical isolation film. In addition, the light absorption layer may be provided in the adhesive layer, so that the adhesive layer can have both a bonding function and a light regulation function. In this way, no additional absorption layer needs to be provided, helping reduce a thickness of the entire optical isolation film. For the imaging device using the optical isolation film, a precision matching requirement of an internal component can also be lowered, and a degree of freedom of assembly is high.

In a possible design, the light absorption layer includes at least one of an ultraviolet light absorption layer, an infrared light absorption layer, a blue light absorption layer, a green light absorption layer, and a red light absorption layer.

During actual preparation of the adhesive layer, a corresponding absorber may be added to a material for the adhesive layer based on a type of light that needs to be mainly absorbed, so that a corresponding absorption layer for absorbing light of a specific wavelength is formed in the adhesive layer. This can implement absorption of light within a specific wavelength range, and can further implement transmission of light of another wavelength, thereby implementing light regulation.

In a possible design, two substrate layers are provided, the two substrate layers are respectively a first substrate layer and a second substrate layer, and the adhesive layer is provided between the first substrate layer and the second substrate layer. The adhesive layer is provided between the first substrate layer and the second substrate layer, so that the adhesive layer can be protected by the two substrate layers.

In a possible design, a low-refractive-index coating is provided on a side that is of the second substrate layer and that is away from the adhesive layer, and a refractive index of the low-refractive-index coating is 1.40 to 1.50. The low-refractive-index coating is provided, so that a low reflectance requirement can be met, and reflectance can be reduced, making reflectance of the optical isolation film on both surfaces as low as 1.0% to 5.0%, thereby resolving problems of ghosting, glare, and stray light.

In a possible design, a transition layer is provided between the low-refractive-index coating and the second substrate layer. The transition layer can improve adhesion of the low-refractive-index coating, so that the low-refractive-index coating can be reliably attached to the substrate layer, and can also improve abrasion resistance, hardness, weathering resistance, and chemical resistance of the substrate layer.

In a possible design, a high-refractive-index coating is provided on a side of the low-refractive-index coating, and a refractive index of the high-refractive-index coating is greater than 1.60.

The substrate layer may be first coated with the high-refractive-index coating, and then the high-refractive-index coating may be coated with the low-refractive-index coating, so that the high-refractive-index coating is located between the low-refractive-index coating and the substrate layer; or certainly the substrate layer may be first coated with the low-refractive-index coating, and then the low-refractive-index coating may be coated with the high-refractive-index coating, so that the low-refractive-index coating is located between the high-refractive-index coating and the substrate layer. Therefore, through cooperation between the high-refractive-index coating and the low-refractive-index coating, reflectance of the optical isolation film on both surfaces can be less than 1.0%, and can specifically reach 0.5% to 1.0%.

In a possible design, thicknesses of the low-refractive-index coating and the high-refractive-index coating are 90 nm to 110 nm, thereby facilitating thinning of the optical isolation film.

In a possible design, an ink layer is provided between the adhesive layer and the substrate layer, and the ink layer is located at a circumferential edge of the substrate layer.

The ink layer may be provided on the substrate layer through a screen printing process, and can be encapsulated between the substrate layers by the adhesive layer, so that the ink layer can be isolated from an impact of an environment such as air, water vapor, or cleaning water, avoiding hydrolysis, oxidation, chalking, cracking, peeling, and other problems of the ink layer, and meeting requirements of the ink layer for resistance to high temperature and high humidity, and resistance to long-term light aging.

In a possible design, a surface coating is provided on a surface of the substrate layer.

The surface coating is a hardened coating with a hydrophobic characteristic, with inorganic nanospheres and an anti-UV additive added, so that characteristics of a large contact angle of a water droplet, high abrasion resistance, and resistance to light aging can be provided, meeting requirements of daily automotive interior wiping and cleaning, and chemical resistance.

In a possible design, a thickness of the adhesive layer is 40 µm to 60 µm, so that the entire optical isolation film can be small in size, which can reach 0.5 mm to 0.6 mm, facilitating thinning of the optical isolation film.

In a possible design, a thickness of the substrate layer is 0.1 mm to 0.8 mm, thereby facilitating a thinning design of the optical isolation film.

In a possible design, the substrate layer is one or more of a polycarbonate material layer, a mixed material layer of PC and PMMA, a polymethyl methacrylate material layer, or a polyethylene glycol terephthalate material layer.

In a possible design, the transition layer is an acrylic resin coating, so that adhesion of the low-refractive-index coating can be improved, ensuring reliable combination of the low-refractive-index coating and the substrate layer.

A second aspect of this application further provides an imaging device, including the optical isolation film provided in the first aspect of this application. The imaging device including the optical isolation film has same technical effects as the optical isolation film. Details are not described herein again.

A third aspect of this application further provides a vehicle, including the imaging device provided in the second aspect of this application.

It should be understood that the foregoing general descriptions and the following detailed descriptions are merely examples, and are not intended to limit this application.

### BRIEF DESCRIPTION OF DRAWINGS

FIG. 1 is a diagram of an optical isolation film used in an on-board head-up display device according to an embodiment of this application;
FIG. 2 is a diagram of a structure of an optical isolation film according to an embodiment of this application;
FIG. 3 is a diagram of a structure of an optical isolation film according to another embodiment of this application;
FIG. 4 is a diagram of a structure of an optical isolation film according to another embodiment of this application;
FIG. 5 is a diagram of a structure of an optical isolation film according to another embodiment of this application;
FIG. 6 is a diagram of a structure of an optical isolation film according to another embodiment of this application;
FIG. 7 is a diagram of a structure of an optical isolation film according to another embodiment of this application; and
FIG. 8 is a diagram of a light path corresponding to a case in which an imaging device is used in a vehicle according to this application.

### Reference numerals:

1: Substrate layer;
11: First substrate layer;
12: Second substrate layer;
2: Adhesive layer;
3: Low-refractive-index coating;
4: High-refractive-index coating;
5: Transition layer;
6: Ink layer;
7: Surface coating;
100: First reflector;
200: Second reflector;
300: Diffusion screen;
400: Windshield;
500: Optical isolation film;
600: Eye;
700: White spot;
800: On-board head-up display device.

The accompanying drawings herein are incorporated into this specification and constitute a part of this specification, show embodiments in accordance with this application, and are used, together with this specification, to explain the principle of this application.

### DESCRIPTION OF EMBODIMENTS

To better understand technical solutions of this application, the following describes embodiments of this application in detail with reference to the accompanying drawings. It should be understood that the specific embodiments described herein are merely used to explain this application but are not intended to limit this application.

In descriptions of this application, unless otherwise specified and limited, the terms "first" and "second" are merely intended for a purpose of description, and should not be understood as an indication or implication of relative importance. Unless otherwise specified or stated, the term "a plurality of" means two or more than two. The terms "connection", "fastening", and the like should be understood in a broad sense. For example, the "connection" may be a fixed connection, or may be a detachable connection, an integrated connection, or an electrical connection, or may be a direct connection, or may be an indirect connection by using an intermediate medium. A person of ordinary skill in the art may understand specific meanings of the foregoing terms in this application based on a specific case.

A head-up display (Head-Up Display, HUD) device can project a current speed per hour, navigation, and other information onto a photoelectric display apparatus on a windshield to form an image in front of the windshield, so that a driver can see the navigation and speed information without turning or lowering the head. However, for an existing HUD device, in a sunlight backflow scenario, a focus is formed through gathering of sunlight transmitted through a light transmission surface of the HUD device, and consequently an internal component is overheated or burnt out; and sunlight gathering causes white spots, affecting visual experience. In addition, an outer surface or an inner surface of the light transmission surface of the HUD device also has high light reflectance for sunlight. For example, when the light reflectance of the outer surface of the light transmission surface is excessively high, severe glare is caused; or when the light reflectance of the inner surface of the light transmission surface is excessively high, stray light appears, causing ghosting. Regardless of whether the outer surface or the inner surface of the light transmission surface of the HUD device has excessively high light reflectance, visual fatigue and dizziness are likely to occur, affecting experience.

Embodiments of this application provide an optical isolation film. The optical isolation film may be used in an imaging device. The imaging device may be used in a vehicle. Specifically, the imaging device may be a display imaging device or a projection imaging device. A specific application scenario may be a scenario in which anti-sunlight backflow, anti-glare, anti-image ghosting, or the like is required. The display imaging device includes but is not limited to an on-board head-up display device, and an on-board display device on a driver seat, a front passenger seat, or a rear passenger seat. The projection imaging device may be but is not limited to a projector, or may be used on a windshield, a vehicle window, a rear window, or another position.

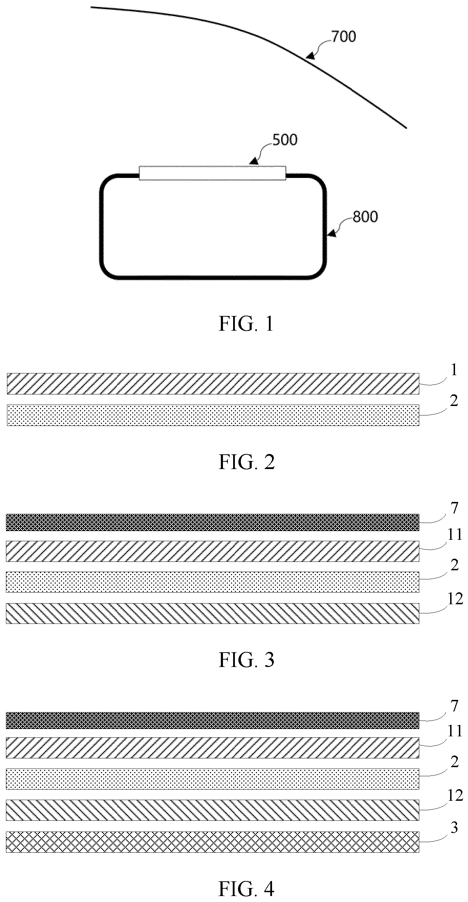

FIG. 1 is a diagram of an optical isolation film used in an on-board head-up display device 800 according to an embodiment of this application. Refer to FIG. 1. In this embodiment, an example in which the optical isolation film 500 is used in the on-board head-up display device is used for description.

FIG. 2 is a diagram of a structure of an optical isolation film according to an embodiment of this application. Refer to FIG. 2. The optical isolation film includes at least one substrate layer 1 and an adhesive layer 2. The adhesive layer 2 is attached to the substrate layer 1. Alight absorption layer (not shown in the figure) is provided in the adhesive layer 2. A wavelength of light absorbed by the light absorption layer is 200 nm to 2500 nm.

The substrate layer 1 and the adhesive layer 2 are stacked and combined to form an entire optical film. The optical film has a small thickness that may reach 0.3 mm to 1 mm. The optical isolation film as a whole may be attached to a light transmission surface of an HUD device, or may be attached to another light transmission surface that requires anti-sunlight backflow, anti-glare, anti-image ghosting, or the like, such as a vehicle windshield or a vehicle window, or may be attached to a light transmission surface of a display device or a projection device. For ease of description, this embodiment is described by using an example in which an imaging device is an HUD device.

In this embodiment, the light absorption layer in the adhesive layer 2 may selectively absorb light of a wavelength within a range of 200 nm to 2500 nm. Light within the wavelength range may be infrared light, ultraviolet light, blue light, filtered light, red light, or the like. The light absorption layer may absorb one or more of the light.

Therefore, the adhesive layer 2 can be reliably combined with the substrate layer 1 as a whole, implementing a bonding function, and can further absorb a corresponding type of light through the light absorption layer in the adhesive layer 2, implementing regulation of light transmittance. In this way, problems such as white spots, heat aggregation, glare, and ghosting caused by sunlight backflow can be reduced effectively in a light path system by using the optical isolation film, so that good experience requirements can be met. In addition, the light absorption layer may be provided in the adhesive layer 2, so that the adhesive layer 2 can have both a bonding function and a light regulation function. In this way, no additional absorption layer needs to be provided, helping reduce a thickness of the entire optical isolation film. For the imaging device using the optical isolation film, a precision matching requirement of an internal component can also be lowered, and a degree of freedom of assembly is high.

Optionally, the light absorption layer may include at least one of an ultraviolet light absorption layer, an infrared light absorption layer, a blue light absorption layer, a green light absorption layer, and a red light absorption layer. The ultraviolet light absorption layer may absorb ultraviolet light of a wavelength of 200 nm to 400 nm. The infrared light absorption layer may absorb infrared light of a wavelength of 700 nm to 2500 nm. The blue light absorption layer may absorb blue light of a wavelength of 400 nm to 480 nm. The green light absorption layer may absorb green light of a wavelength of 480 nm to 580 nm. The red light absorption layer may absorb red light of a wavelength of 580 nm to 700 nm. During actual preparation of the adhesive layer 2, a corresponding absorber may be added to a material for the adhesive layer 2 based on a type of light that needs to be mainly absorbed, so that a corresponding absorption layer for absorbing light of a specific wavelength is formed in the adhesive layer 2. This can implement absorption of light within a specific wavelength range, and can further implement transmission of light of another wavelength, thereby implementing light regulation. For example, the light absorption layer may include only an infrared light absorption layer to absorb infrared light of a wavelength of 700 nm to 2500 nm, and allow blue light of a wavelength of 400 nm to 480 nm to be normally transmitted through a light transmission surface of the HUD device. In another example, the light absorption layer may include an infrared light absorption layer, an ultraviolet light absorption layer, and a blue light absorption layer to absorb infrared light of a wavelength of 700 nm to 2500 nm, ultraviolet light of a wavelength of 200 nm to 400 nm, and blue light of a wavelength of 400 nm to 480 nm, and allow green light of a wavelength of 480 nm to 580 nm and red light of a wavelength of 580 nm to 700 nm to be normally transmitted through a light transmission surface of the HUD device.

Specifically, a material of an adhesive in the adhesive layer 2 may be an optical double-sided adhesive (Optically Clear Adhesive, OCA), a liquid optical adhesive (Optical Clear Resin, OCR), or the like. A cured OCR adhesive is colorless and transparent, with light transmittance reaching 98% or more, and has advantages of a low curing shrinkage rate, resistance to yellow edges, and the like. An OCA adhesive has high cleanliness, high light transmittance, and low haze, and also has high adhesion, which can ensure reliable combination of the adhesive layer 2 and the substrate layer 1.

In addition, an infrared light absorber may be used for the infrared light absorption layer, such as a cyanine dye, phthalocyanine, a quinone compound, an azo dye, or a metal complex. These materials can reduce infrared light transmittance. Specifically, one of these materials may be used, or a combination of more of these materials may be used for preparation. The infrared light transmittance can be adjusted within a range of 0.1% to 95% by adjusting a ratio of the infrared light absorber to the adhesive. Different materials have different light absorption capabilities. For example, the foregoing materials for preparing the infrared light absorption layer have different infrared light absorption capabilities, and also have different transmission capabilities for other types of light. Transmission capabilities for different types of light can be regulated by configuring different materials, so that problems such as white spots, heat aggregation, glare, and ghosting caused by sunlight backflow can be reduced.

Specifically, a red light absorber may be used for the red light absorption layer, for example, a porphyrin ring compound, which can reduce red light transmittance. The red light transmittance can be adjusted within a range of 10% to 90% by adjusting a ratio of the red light absorber to the adhesive. A green light absorber may be used for the green light absorption layer, for example, a dipyrromethene compound, which can reduce green light transmittance. The green light transmittance can be adjusted within a range of 10% to 90% by adjusting a ratio of the green light absorber to the adhesive. A blue light absorber may be used for the blue light absorption layer, for example, o-naphthyl ketone oxygen, which can reduce blue light transmittance. The red light transmittance can be adjusted within a range of 10% to 90% by adjusting a ratio of the blue light absorber to the adhesive. An ultraviolet light absorber may be used for the ultraviolet light absorption layer, for example, one or a combination of more of phenyl ketone, salicylate, and benzotriazole, which can reduce ultraviolet light transmittance. The ultraviolet light transmittance can be adjusted within a range of 0.1% to 95% by adjusting a ratio of the ultraviolet light absorber to the adhesive.

In addition, only an absorption layer material for a single type of light may be mixed into the adhesive layer 2, or absorption layer materials for different types of light may be mixed into the adhesive layer 2, so that indexes such as a color gamut, a color appearance, and haze can be flexibly regulated, and reflectance of the film can be effectively reduced.

Optionally, a material of the substrate layer 1 may have a characteristic of a low phase difference, a uniform phase difference, or isotropy, to implement a function of polarization imaging. Specifically, the substrate layer 1 may be one or a composite layer of more of a polycarbonate (PC) material layer, a mixed material layer of PC and PMMA, a polymethyl methacrylate (polymethyl methacrylate, PMMA) material layer, or a polyethylene glycol terephthalate (polyethylene glycol terephthalate, PET) material layer. Certainly, the substrate layer 1 may alternatively be made of another polymer material with a characteristic of a low phase difference, a uniform phase difference, or isotropy, so that the substrate layer 1 can have characteristics of polarization imaging, resistance to high temperature, high transmittance, and low warpage.

As a specific implementation, FIG. 3 is a diagram of a structure of an optical isolation film according to another embodiment of this application. Refer to FIG. 3. Two substrate layers 1 are provided. For ease of description, in this embodiment, the two substrate layers may be defined as a first substrate layer 11 and a second substrate layer 12 respectively, and the adhesive layer 2 is provided between the first substrate layer 11 and the second substrate layer 12.

The first substrate layer 11 and the second substrate layer 12 may be made of a same material, and each may be a PC film with a low phase difference or a uniform phase difference, to have characteristics of polarization imaging, resistance to high temperature, high transmittance, and low warpage. In addition, the adhesive layer 2 is provided between the first substrate layer 11 and the second substrate layer 12, so that the adhesive layer 2 can be protected by the two substrate layers.

In addition, in some other embodiments, the adhesive layer 2 may alternatively be provided on an outer side of the first substrate layer 11 or the second substrate layer 12, instead of being provided between the first substrate layer 11 and the second substrate layer 12, and it is sufficient for the first substrate layer 11 and the second substrate layer 12 to be connected by a common adhesive.

As a specific implementation, FIG. 4 is a diagram of a structure of an optical isolation film 500 according to another embodiment of this application. Refer to FIG. 4. A low-refractive-index coating 3 is provided on a side that is of the second substrate layer 12 and that is away from the adhesive layer 2, and a refractive index of the low-refractive-index coating 3 is 1.40 to 1.50. The low-refractive-index coating 3 is provided, so that a low reflectance requirement can be met, and reflectance can be reduced, making reflectance of the optical isolation film 500 on both surfaces as low as 1.0% to 5.0%, thereby resolving problems of ghosting, glare, and stray light.

In this embodiment, the "first" and "second" in the first substrate layer 11 and the second substrate layer 12 are merely intended to facilitate description that there are two substrate layers, and do not indicate a sequence. In other words, during actual preparation of the optical isolation film 500, the low-refractive-index coating 3 may be provided on the first substrate layer 11 or the second substrate layer 12.

A thickness of each substrate layer may be 0.1 mm to 0.8 mm, thereby facilitating a thinning design of the optical isolation film 500. The substrate layer may be made of a roll material or a sheet material. A substrate thickness less than 0.375 mm can meet a production process requirement of a roll material and a coating process requirement of the low-refractive-index coating 3.

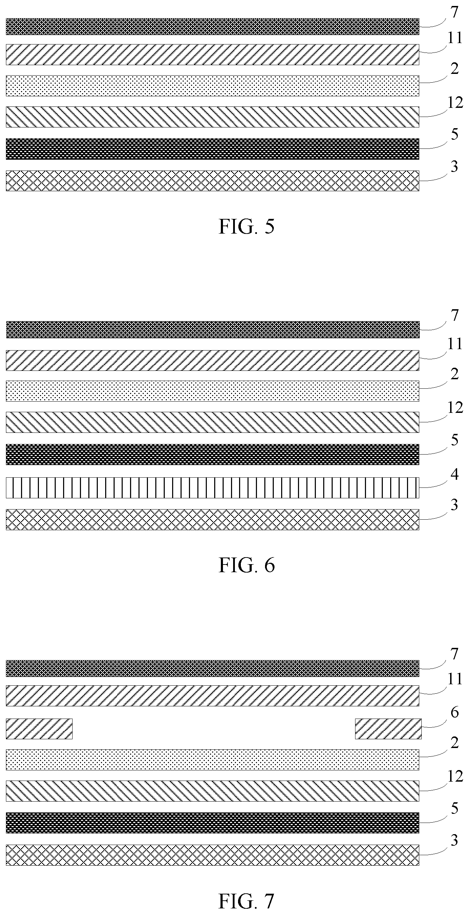

In addition, the low-refractive-index coating 3 needs to be applied to the substrate layer, but a problem of unreliable coating of the low-refractive-index coating 3 on the substrate layer occurs, which is likely to cause a problem of partial separation between the low-refractive-index coating 3 and the substrate layer. Therefore, FIG. 5 is a diagram of a structure of an optical isolation film 500 according to another embodiment of this application. Refer to FIG. 5. In this embodiment, a transition layer 5 may be provided between the low-refractive-index coating 3 and the second substrate layer 12. This can improve adhesion of the low-refractive-index coating, so that the low-refractive-index coating 3 can be reliably attached to the substrate layer, and can also improve abrasion resistance, hardness, weathering resistance, and chemical resistance of the substrate layer.

Optionally, the transition layer 5 may be an acrylic resin coating, so that adhesion of the low-refractive-index coating 3 can be improved, ensuring reliable combination of the low-refractive-index coating 3 and the substrate layer. Certainly, a material of the transition layer 5 may alternatively be another material that can improve adhesion of the low-refractive-index coating 3. This is not limited in embodiments.

As a specific implementation, FIG. 6 is a diagram of a structure of an optical isolation film 500 according to another embodiment of this application. Refer to FIG. 6. A high-refractive-index coating 4 is provided on a side of the low-refractive-index coating 3, and a refractive index of the high-refractive-index coating 4 is greater than 1.60.

The substrate layer may be first coated with the high-refractive-index coating 4, and then the high-refractive-index coating 4 may be coated with the low-refractive-index coating 3, so that the high-refractive-index coating 4 is located between the low-refractive-index coating 3 and the substrate layer; or certainly the substrate layer may be first coated with the low-refractive-index coating 3, and then the low-refractive-index coating 3 may be coated with the high-refractive-index coating 4, so that the low-refractive-index coating 3 is located between the high-refractive-index coating 4 and the substrate layer. Therefore, through cooperation between the high-refractive-index coating and the low-refractive-index coating, reflectance of the optical isolation film 500 on both surfaces can be less than 1.0%, and can specifically reach 0.5% to 1.0%.

Certainly, as shown in FIG. 6, a transition layer 5 may also be provided between the high-refractive-index coating 4 and the second substrate layer 12, to improve adhesion of the high-refractive-index coating 4, and ensure reliable combination of the high-refractive-index coating 4 and the substrate layer.

As a specific implementation, thicknesses of the low-refractive-index coating 3 and the high-refractive-index coating 4 are 90 nm to 110 nm, specifically may be 90 nm, 100 nm, or 110 nm, thereby facilitating thinning of the optical isolation film 500.

In addition, a thickness of the adhesive layer 2 may be 40 µm to 60 µm. Specifically, the thickness of the adhesive layer 2 may be 40 µm, 50 µm, or 60 µm, with the thickness 0.1 mm to 0.8 mm of the substrate layer, so that the entire optical isolation film 500 can be small in size, which can reach 0.5 mm to 0.6 mm, facilitating thinning of the optical isolation film 500.

As a specific implementation, an ink layer 6 is provided between the adhesive layer 2 and the substrate layer, and the ink layer 6 is located at a circumferential edge of the substrate layer. The ink layer 6 may be provided on the substrate layer through a screen printing process, and can be encapsulated between the substrate layers by the adhesive layer 2, so that the ink layer 6 can be isolated from an impact of an environment such as air, water vapor, or cleaning water, avoiding hydrolysis, oxidation, chalking, cracking, peeling, and other problems of the ink layer 6, and meeting requirements of the ink layer 6 for resistance to high temperature and high humidity, and resistance to long-term light aging.

As a specific implementation, FIG. 7 is a diagram of a structure of an optical isolation film 500 according to another embodiment of this application. Refer to FIG. 7. A surface coating 7 may be provided on a surface of the substrate layer. The surface coating 7 is a hardened coating with a hydrophobic characteristic, with inorganic nanospheres and an anti-UV additive added, so that characteristics of a large contact angle of a water droplet, high abrasion resistance, and resistance to light aging can be provided, meeting requirements of daily automotive interior wiping and cleaning, and chemical resistance.

For example, as shown in FIG. 7, during actual preparation, the optical isolation film 500 may be specifically processed and prepared through the following steps.

Step S1: Select a roll PC film as a first substrate layer 11 and a second substrate layer 12, where a thickness of each substrate layer may be 0.25 mm.

Step S2: Coat a surface on one side of the first substrate layer 11 with a hydrophobic surface coating 7.

Step S3: Screen-print an ink layer 6 onto a surface on the other side of the first substrate layer 11. Because there is usually an adhesive at an edge of the first substrate layer 11, the ink layer 6 can cover an appearance of the adhesive, implementing appearance modification.

Step S4: Coat a surface on a side of the second substrate layer 12 with a transition layer 5, where an acrylic resin material may be used for the transition layer 5.

Step S5: Coat the transition layer 5 with a low-refractive-index coating 3, where a thickness of the low-refractive-index coating 3 may be 100 nm.

Step S6: Prepare an adhesive film, to dope the adhesive film with an absorber for infrared light, visible light, and ultraviolet light.

Step S7: Coat, with the adhesive film, a surface that is of the second substrate layer 12 and that faces away from the transition layer 5, to form an adhesive layer 2, where a thickness of the adhesive layer 2 may be 50 µm.

Step S8: Solder and fasten the first substrate layer 11 and the second substrate layer 12 by the adhesive layer 2, to form the optical isolation film 500, as shown in FIG. 7. A thickness of the optical isolation film 500 prepared by the foregoing method can reach 0.56 mm, implementing thinning of the optical isolation film 500.

A light absorption layer is mixed into the adhesive layer 2, so that light transmittance can be regulated. For example, transmittance for light of a wavelength of 780 nm to 1600 nm can reach 46.6%, transmittance for light of a wavelength of 580 nm to 680 nm can reach 63.2%, transmittance for light of a wavelength of 480 nm to 580 nm can reach 60.7%, transmittance for light of a wavelength of 420 nm to 480 nm can reach 57.6%, transmittance for light of a wavelength of 300 nm to 380 nm can reach 0.05%, and transmittance for light of a wavelength of 420 nm to 680 nm can reach 2.7%.

Controllable absorption at all wavelength bands can be implemented by using the optical isolation film 500 provided in this embodiment. 50% of intensity of light incident to the optical isolation film 500 can be converted based on predicted intensities of infrared light, ultraviolet light, and visible light. In a sunlight backflow scenario, photothermal aggregation intensity can be reduced to 40%.

In addition, compared with a conventional solution in which only a PC film is provided without the optical isolation film 500, in this embodiment, photothermal aggregation intensity can be reduced by 80% by providing the optical isolation film 500. Compared with a conventional solution in which a polarizing film is used, in this embodiment, photothermal aggregation intensity can be reduced by 33% by providing the optical isolation film 500. Therefore, the optical isolation film 500 provided in this embodiment can reduce thermal effect, which can effectively resolve a problem of heat aggregation.

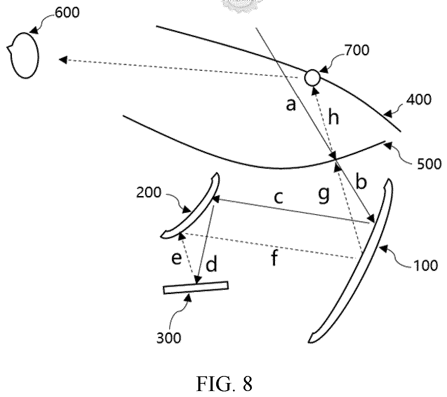

In a specific embodiment, as shown in FIG. 1, the imaging device is the on-board head-up display device 800, that is, an HUD device. The HUD device is disposed in a vehicle and can perform imaging in front of a vehicle windshield 400. FIG. 8 is a diagram of a light path corresponding to a case in which an imaging device is used in a vehicle according to this application. Refer to FIG. 1 and FIG. 8. The HUD device includes a first reflector 100, a second reflector 200, a diffusion screen 300, and a housing. The housing has a light transmission surface. The optical isolation film 500 may be provided on the light transmission surface of the housing. Sunlight may be incident to the first reflector 100 through the windshield 400 and the optical isolation film 500 in sequence, where a light path a is formed between the windshield 400 and the optical isolation film 500, and a light path b is formed between the optical isolation film 500 and the first reflector 100. Then, light reflected by the first reflector 100 is incident to the second reflector 200, and a light path c is formed between the first reflector 100 and the second reflector 200. Then, light reflected by the second reflector 200 is incident to the diffusion screen 300, and a light path d is formed between the second reflector 200 and the diffusion screen 300. Then, light scattered by the diffusion screen 300 is incident to the second reflector 200, and a light path e is formed between the diffusion screen 300 and the second reflector 200. Then, light reflected by the second reflector 200 is incident to the first reflector 100, and a light path f is formed between the second reflector 200 and the first reflector 100. Then, light reflected by the first reflector 100 is incident to the windshield 400 through the optical isolation film 500, a light path g is formed between the first reflector 100 and the optical isolation film 500, and a light path h is formed between the optical isolation film 500 and the windshield 400. Then, light is reflected by the windshield 400 and then incident to an eye 600.

Refer to FIG. 8. Most of the light passing through the diffusion screen 300 may be diffused, and only a small part of the light may be incident to the second reflector 200 again, and then reflected by the first reflector 100 and the windshield 400 in sequence into the eye 600. Light reflected by the first reflector 100 to the windshield 400 forms a white spot 700 on the windshield 400. However, if only a PC film is provided on the HUD device, or a polarizing film is added based on the PC film, weakening of light intensity is very limited. In this embodiment, light transmittance can be regulated by using the optical isolation film 500. The optical isolation film 500 can absorb light of a corresponding wavelength in the light path a, so that intensity of the light through the optical isolation film 500 in the light path b is reduced by nearly 50% compared with intensity of the light in the light path a, thereby effectively reducing light intensity and weakening a white spot phenomenon. Compared with a solution in which only a PC film is provided on the HUD device, in this embodiment, white spot effect caused by sunlight backflow can be weakened by 250%; and compared with a solution in which a polarizing film is used, in this embodiment, white spot effect caused by sunlight backflow can be weakened by 70%, thereby effectively weakening a white spot phenomenon.

The foregoing descriptions are merely preferred embodiments of this application, and are not intended to limit this application. For a person skilled in the art, this application may have various modifications and variations. Any modification, equivalent replacement, or improvement made within the spirit and principle of this application shall fall within the protection scope of this application.

## Claims

1. An optical isolation film, comprising:
at least one substrate layer; and
an adhesive layer, wherein the adhesive layer is attached to the substrate layer, a light absorption layer is provided in the adhesive layer, and a wavelength of light absorbed by the light absorption layer is 200 nm to 2500 nm.

2. The optical isolation film according to claim 1, wherein the light absorption layer comprises at least one of an ultraviolet light absorption layer, an infrared light absorption layer, a blue light absorption layer, a green light absorption layer, and a red light absorption layer.

3. The optical isolation film according to claim 1, wherein two substrate layers are provided, the two substrate layers are respectively a first substrate layer and a second substrate layer, and the adhesive layer is provided between the first substrate layer and the second substrate layer.

4. The optical isolation film according to claim 3, wherein a low-refractive-index coating is provided on a side that is of the second substrate layer and that is away from the adhesive layer, and a refractive index of the low-refractive-index coating is 1.40 to 1.50.

5. The optical isolation film according to claim 4, wherein a transition layer is provided between the low-refractive-index coating and the second substrate layer.

6. The optical isolation film according to claim 4, wherein a high-refractive-index coating is provided on a side of the low-refractive-index coating, and a refractive index of the high-refractive-index coating is greater than 1.60.

7. The optical isolation film according to claim 6, wherein thicknesses of the low-refractive-index coating and the high-refractive-index coating are 90 nm to 110 nm.

8. The optical isolation film according to any one of claims 1 to 7, wherein an ink layer is provided between the adhesive layer and the substrate layer, and the ink layer is located at a circumferential edge of the substrate layer.

9. The optical isolation film according to any one of claims 1 to 7, wherein a surface coating is provided on a surface of the substrate layer.

10. The optical isolation film according to any one of claims 1 to 7, wherein a thickness of the adhesive layer is 40 µm to 60 µm.

11. The optical isolation film according to any one of claims 1 to 7, wherein a thickness of the substrate layer is 0.1 mm to 0.8 mm.

12. The optical isolation film according to claim 1, wherein the substrate layer is one or more of a polycarbonate material layer, a mixed material layer of PC and PMMA, a polymethyl methacrylate material layer, or a polyethylene glycol terephthalate material layer.

13. The optical isolation film according to claim 5, wherein the transition layer is an acrylic resin coating.

14. An imaging device, comprising the optical isolation film according to any one of claims 1 to 13.

15. A vehicle, comprising the imaging device according to claim 14.
